# EUROPÄISCHE PATENTSCHRIFT

(11) **EP 0 829 571 B1**
(45) Veröffentlichungstag und Bekanntmachung des Hinweises auf die Patenterteilung: **18.04.2007**
(21) Anmeldenummer: 97113290.7
(22) Anmeldetag: 01.08.1997
(51) Int. Cl.: D21B 1/32

(54) **Verfahren zur Gewinnung von Faserstoff und Kunststoff aus Rejekten aus Pulperentsorgungssystemen**
Process for recovery of fibres from rejects from pulping disposal systems
Procédé de récupération de fibres et de matière plastiques à partir des rejets de systèmes d'évacuation de mise en pâte

(30) Priorität: 12.09.1996 DE 19637031; 14.05.1997 DE 19720052
(43) Veröffentlichungstag der Anmeldung: 18.03.1998
(73) Patentinhaber: Boltersdorf, Hans-Joachim, 56656 Brohl-Lützing (DE)
(72) Erfinder: Boltersdorf, Hans-Joachim, 56656 Brohl-Lützing (DE)
(74) Vertreter: Castell, Klaus

(56) Entgegenhaltungen:
- WO-A-91/17304
- DE-A- 2 416 251
- DE-A- 2 701 737
- DE-A- 2 922 141
- US-A- 3 941 316
- US-A- 4 030 671
- US-A- 4 440 635

## Beschreibung

Die Erfindung betrifft ein Verfahren zur Gewinnung von Faserstoff und Kunststoff aus Rejekten aus Pulperentsorgungssystemen.

Bei der Herstellung von Papier fallen als Reststoffe u. a. Rejekte aus Pulperentsorgungssystemen und Schlämme an.

Vor allem bei der Verwendung von Altpapier als Rohstoff ist der Anteil der Rejekte, der auch als Spuckstoff bezeichnet wird, besonders hoch.

Diese Reststoffe werden üblicherweise entwässert und auf Deponien entsorgt oder der Verbrennung zugeführt. Eine weitere Möglichkeit der Entsorgung liegt in der teilweisen Kompostierung, die bisher nur eine geringe wirtschaftliche Bedeutung hat.

Diese bekannten Entsorgungsmöglichkeiten belasten die Umwelt und führen zu hohen Kosten, die das Papierherstellungsverfahren verteuern.

Aus diesen Gründen wird schon in der Papierfabrik meistens darauf geachtet, den Anteil der Reststoffe beispielsweise durch Auswaschen möglichst gering zu halten. Derartige Verfahren führen jedoch aus wirtschaftlichen Gründen immer zu einem Reststoff, der aus unterschiedlichsten Fraktionen besteht. Im Rahmen dieser Anmeldung wird daher unter Reststoff die Summe der Materialien verstanden, die bei der Papierherstellung als unbrauchbar aussortiert werden. Einen großen Anteil dieser Reststoffe bilden Rejekte aus Pulperentsorgungssystemen. Der Anteil der Schlämme beträgt etwa 60 % der Reststoffe.

So schlagen beispielsweise die US 4,030,671, die DE 29 22 141 A1, die DE 27 01 737 A1 und die DE 24 16 251 A1 Verfahren vor, bei welchen die Reststoffe in Pulperentsorgungssystemen behandelt werden. Darüber hinaus sind aus der US 4,030,671, aus der US 3,941,316 und aus der WO 91/17304 A1 Entsorgungssysteme mit umlaufenden Bändern zur Trennung von Partikeln bekannt.

Der Erfindung liegt die Aufgabe zugrunde, Verfahren vorzuschlagen, mit denen eine wirtschaftliche und umweltgerechte Verarbeitung der Reststoffe erreicht wird.

Diese Aufgabe wird gelöst durch das Verfahren des Anspruchs 1.

Hierbei erreicht die Erfindung durch die von ihr vorgeschlagenen Maßnahmen eine überraschende Erhöhung des Wirkungsgrades und somit der Wirtschaftlichkeit und der Umweltverträglichkeit. Dieses geschieht durch den kontinuierlichen Betrieb eines Pulpers bei einer hohen mittleren Gesamtstoffdichte, wobei die Pulper nach dem Stand der Technik, wie insbesondere aufgrund ihrer Schraubenausgestaltung ersichtlich, bei niedrigen Gesamtstoffdichten betrieben werden.

Vorteilhafte Weiterbildungen sind Gegenstand der Unteransprüche.

Die so gewonnenen Faserstoffe können auch anderweitig weiterbehandelt werden. Hierbei ist insbesondere die Herstellung von Dämmstoffen oder die Weiterbehandlung im Gußverfahren zu Eierverpackungen und ähnlichen Faserstofferzeugnissen zu erwähnen.

Der Erfindung liegt die Erkenntnis zugrunde, daß jede Sortieranlage zum Aussortieren von Reststoffen gleichzeitig auch eine Fraktionieranlage ist, weil die Wahrscheinlichkeit der Zurückhaltung der langen Fasern größer ist als die Wahrscheinlichkeit der Zurückhaltung kurzer Fasern. Darüberhinaus verlassen statistisch notwendigerweise immer auch feste Kraftpapierstippen einen kontinuierlich betriebenen Stofflöser eines Altpapierauflösesystems über die Entsorgungsstufe und gelangen so mit in die Rejekte.

Demzufolge ist im Reststoff Langfaserstoff von besonders hoher Qualität enthalten, der beispielsweise bei der Verwendung von Altpapier als Rohstoff die Qualität der verwendeten Altpapierfasern übertrifft. Aus diesem Langfaserstoff können qualitativ hochwertige und zugfeste Papiere hergestellt werden, der Langfaserstoff bildet einen sehr guten Zuschlagsstoff zu den häufig aus mehrfachem Recyclingkreislauf verschlissenen Altpapierfasern und es kann in erheblichem Umfang Schlamm zugemischt werden, was ökologisch und ökonomisch gleichermaßen bedeutsam ist.

Somit ist es möglich, aus bei der Papierherstellung aussortierten Reststoffen einen besonders hochwertigen Faserstoff, Vlies oder Papier herzustellen. Erfindungsgemäß wird somit vorgeschlagen, die übliche Zerstörung der Reststoffe in Deponien oder Feuerungsanlagen durch eine Trennung in Faserstoffe und Begleitstoffe zu ersetzen. Dadurch entsteht einerseits ein hochwertiger Faserstoff, der zu Papier weiterverarbeitet werden kann und andererseits ein wirtschaftlich nutzbarer Kunststoff neben anderen Wertstoffen wie magnetischen Stoffen, Aluminium und Glas.

Vorteilhaft ist es, wenn die Reststoffe in einem kontinuierlich betriebenen Pulper möglichst dickflüssig vorbehandelt werden um Faserstoffe abzutrennen. Eine hohe Gesamtstoffdichte im Pulper bei gleichzeitig niedriger Faserstoffdichte sorgt für eine starke und schonende mechanische Beanspruchung der Reststoffe, die für eine Entstippung der Kraftpapierstippen und schwerzerfaserbaren Stippen sorgt und die Weiterbehandlung der Begleitstoffe erleichtert.

Eine weitere Effizienzsteigerung ist dadurch zu erzielen, daß einer ersten Trennstufe mit großen Öffnungen eine zweite Trennstufe mit kleineren Öffnungen folgt. In der ersten Stufe werden die besonders großen Begleitstoffe abgetrennt, um ein Einwickeln wertvoller Faserstoffe und Stippen zu verhindern. Dadurch wird der Trennvorgang in der darauffolgenden zweiten Stufe bzw. den nachfolgenden Stufen verbessert.

Weiter wird vorgeschlagen, daß von den Begleitstoffen im Siebverfahren ggf. über mehrere Stufen grobere Stoffe abgetrennt werden. Hierdurch lassen sich kleinere, dreidimensionale Gebilde aus PVC, Stippenstoffe und sonstige Stoffe von großflächigen Kunststoffgebilden aus Polyethylen und Polypropylen trennen, so daß letztgenannte recycelt bzw. als Brennstoff genutzt werden können.

Eine Ausgestaltung des Trennvorgangs sieht vor, daß ein Strom der Reststoffe zur Trennung mit ständig ändernden Trennflächen zusammentrifft. Dies verhindert eine Haufenbildung im Bereich der Trennfläche, die den Trennvorgang negativ beeinflussen würde.

Besonders vorteilhaft ist es, wenn als Trennfläche ein umlaufendes, Öffnungen aufweisendes Band verwendet wird. Ein derartiges Band ist einfach herzustellen, leicht zu reinigen und besonders zur Behandlung großer Reststoffmengen geeignet. Die Öffnungen sollten größer als 30 x 30 mm sein. Vorteilhaft ist somit eine Maschenweite von mehr als 1000 mm².

Besonders vorteilhaft erfolgt die Trennung in größere Begleitstoffe, Stippen und Fasern dann, wenn alle Teilchen vor dem Kontakt mit dein Trennsystem über eine möglichst große, spezifische Oberfläche verfügen. Die kleinen Teile werden nämlich von den großen Teilen eingehüllt und somit nicht frei gegeben. Eine Vereinzelung der Rejekte vor der Trennung legt die Flächen frei und macht die kleinen Teile einer Trennung zugänglich.

Eine vorteilhafte Trennung sieht vor, daß die Reststoffe zur Vereinzelung mit hoher Geschwindigkeit mit einer Prallplatte zusammentreffen und/oder mit Ablenkplatten in Berührung kommen. Diese Art der Vereinzelung ist besonders schonend und führt dazu, daß die Reststoffklumpen und nicht die Fasern zerkleinert werden. Die notwendige hohe Geschwindigkeit kann durch eine entsprechende Fallhöhe oder durch Pumpleistung erzeugt werden. Darüberhinaus können auch aktive Vereinzelungssysteme wie zum Beispiel Schleuderteller eingesetzt werden.

Vorzugsweise werden in einem ersten Schritt nach einer Vorbehandlung im Pulper die Reststoffe mit Wasser hoher Geschwindigkeit verdünnt und somit durch Turbulenz eine Vereinzelung erzeugt.

Eine Verdünnung auf 0,5% vorzugsweise 0,1% Faserstoffdichte sorgt für eine Suspendierung der Fasern im Wasser. Die Verdünnung bzw. Mischung mit Wasser sollte so stark sein, daß mit Unterstützung von eingedüster Luft jede Faser nicht nur benetzt, sondern vollständig von Wasser umgeben ist und Schwerteile in dem folgenden Schwerteilefang absinken können.

Diese Vereinzelung der Rejekte in Fasern, Begleitstoffe, Schwerteile und ggf. Reststippen sollte vor jeder weiteren Trennstufe erhalten bleiben.

Erst nach dieser Vorbehandlung werden die in Wasser suspendierten Fasern von den Begleitstoffen getrennt, indem das Wasser mit den Fasern beispielsweise abtropft. Diese Trennung kann zusätzlich durch Sprühdüsen unterstützt werden.

Eine vorteilhafte Ausgestaltung sieht vor, daß die verdünnten Reststoffe zur Vereinzelung mit Hilfe eines Adhäsions/Kohäsions-Suspensionsverteilers vorab in kleine und große Teile getrennt und mit Ablenkplatten über die gesamte, zur Verfügung stehende Fläche des Trennsystems verteilt werden.

Vorzugsweise wird vor der Vereinzelung durch den Suspensionsverteiler eine Entfernung der Schwerteile vorgenommen. Besonders vorteilhaft wird diese Schwerteilentfernung durch ein unmittelbar nach dein Schwerteilefang angebrachtes, kontinuierlich arbeitendes Entsorgungssystem vorgenommen, da es sich hierbei nicht wie üblich um ein periodisches System mit unterbrochenen Vorgängen sondern ein störungsfrei arbeitendes System mit integrierter Gegenstromwäsche handelt.

Durch diese Art der Ausgestaltung erhält man faserstofffreie Schwerteile, die einer erneuten Nutzung zugeführt werden können (z. B. Stahlschrott oder Glas).

Zur Weiterbehandlung der abgetrennten Begleitstoffe wird vorgeschlagen, von den Begleitstoffen im Sinkverfahren schwimmfähige Stoffe abzutrennen. Durch das Einleiten der Begleitstoffe in ein Wasserbecken können an der Oberfläche des Wasserbeckens schwimmfähige und am Boden des Beckens schwerere Stoffe entnommen werden. Polyethylen und Polypropylen werden dabei aufschwimmen und Polyvinylchlorid und Stippen sowie sonstige schwere Stoffe gehen unter.

Im Anschluß an die mehrstufige Spuckstoffsiebung mittels Reihenschaltung umlaufender Bänder oder sonstiger Siebmaschinen kommen modifizierte Sink-Schwimm-Trennsysteme zum Einsatz mit folgenden besonderen Eigenschaften:
1. für die Begleitstoffe der 1. Siebung (große Begleitstoffe) besitzt der Behälter vorteilhaft eine längliche Form mit einer relativ großen Anzahl Wäschern (Paddeln) relativ hoher Drehzahl.
   Funktion: Die großen Olefinteile werden intensiv gewaschen und transportiert ohne unterzugehen (da sie eine relativ große Auftriebsgeschwindigkeit besitzen).
2. für die Begleitstoffe der folgenden Siebungen (kleinere Begleitstoffe) besitzten die Behälter vorteilhafterweise eine entsprechend kürzere, dafür breitere Form mit geringerer Anzahl Paddeln geringerer Drehzahl.
   Funktion: Die kleineren Olefinteile werden (bedingt durch die größere spezifische Oberfläche) trotzdem gut gewaschen bei relativ geringen Abmessungen des Gesamtsystems ohne unterzugehen (d. h. auch hier mit einem relativ guten Wirkungsgrad)
3. bedingt durch die unter 1. und 2. beschriebene besondere Ausgestaltung sind ohne Vorzerkleinerung große Durchsatzleistungen erzielbar.
4. die vorausgehende Siebung mit erfindungsgemäßer Sprühwäsche bringt eine sehr geringe Anreicherung der Sink-Schwimm-Trennsystemflüssigkeit mit Faserstoff mit sich (ohne aufwendige Maßnahmen zur Flüssigkeitsreinigung) mit der Folge, daß unaufgelöste Papierteile (Stippen) relativ schnell absinken und vom Boden mittels geeigneter Räumer (z. B. bewährter Spiralräumer) entnommen und zur Wiederverwendung in den Prozeß zurückgeführt werden können
5. die Begleitstoffaufgabe erfolgt vorteilhafterweise über ein etwa halbhohes Wehr, um die Begleitstoffe zu zwingen erst unterzutauchen und anschließend von unten nach oben getrennt zu werden (dies erhöht die Qualität der abgetrennten Olefine nochmals und sorgt für eine bessere Entlüftung).
6. es werden vorteilhafterweise mehrstufige Sink-Schwimm-Trennsysteme eingesetzt oder aber besser werden mehrere Einzelsysteme hintereinander geschaltet, so daß die Durchflußgeschwindigkeit (eingestellt über Zusatzwasser) vom ersten System über das zweite bis zum dritten System hin abnimmt.
   Hierdurch erfolgt bereits zu diesem Zeitpunkt eine weitere Trennung in schnellsinkende Teile (PVC), mittel schnellsinkende Teile (Stippen) und langsam sinkende Teile (Stickies, die schwerer als Wasser sind).
   Die Behälterabmessungen sollten hierbei vorteilhafterweise zunehmende Tiefe und Breite sowie Länge aufweisen.

Die Trennung der wertvollen Stippenstoffe von den eventuell noch vorhandenen wertlosen PVC- und sonstigen Stoffen erfolgt dann wie oben beschrieben bei hoher Gesamtstoffdichte bei gleichzeitig niedriger Faserstoffdichte in einem weiteren, kleineren Stofflöser unter Einsatz der beschriebenen Trennverfahren, dieses Mal mit wesentlich kleineren Sieböffnungen.

Bei den wertvollen Stippen handelt es sich in der Regel um Primärstoff von besonders guter Qualität, d. h. um Fasern, die noch nicht wiederholt recycelt worden sind. Dieser Primärstoff kann in Verbindung mit einer faserschonenden Mahlung und einer Trocknung in der Papiermaschine mit geringer Schrumpfungsbehinderung zu besonders wertvollen Papieren verarbeitet werden. Außerdem lassen sich auf diese Art nicht nur Stippen, sondern auch andere Problemstoffe, wie naßfeste Papiere und Verbundstoffe wirksam und wirtschaftlich zerfasern und recyceln.

Ein Ausführungsbeispiel zur Durchführung des erfindungsgemäßen Verfahrens ist in der Zeichnung dargestellt und wird im folgendem näher beschrieben.

Es zeigt,
- Figur 1: eine schematische Darstellung des Verfahrensablaufes,
- Figur 2: eine genauere Darstellung des in Figur 1 gezeigten ersten Pulpers,
- Figur 3: eine schematische Darstellung eines Stoffdichtegebers,
- Figur 4: eine schematische Darstellung eines Rohrreaktorpulpers,
- Figur 5: eine schematische Darstellung eines Verdichterpulpers.

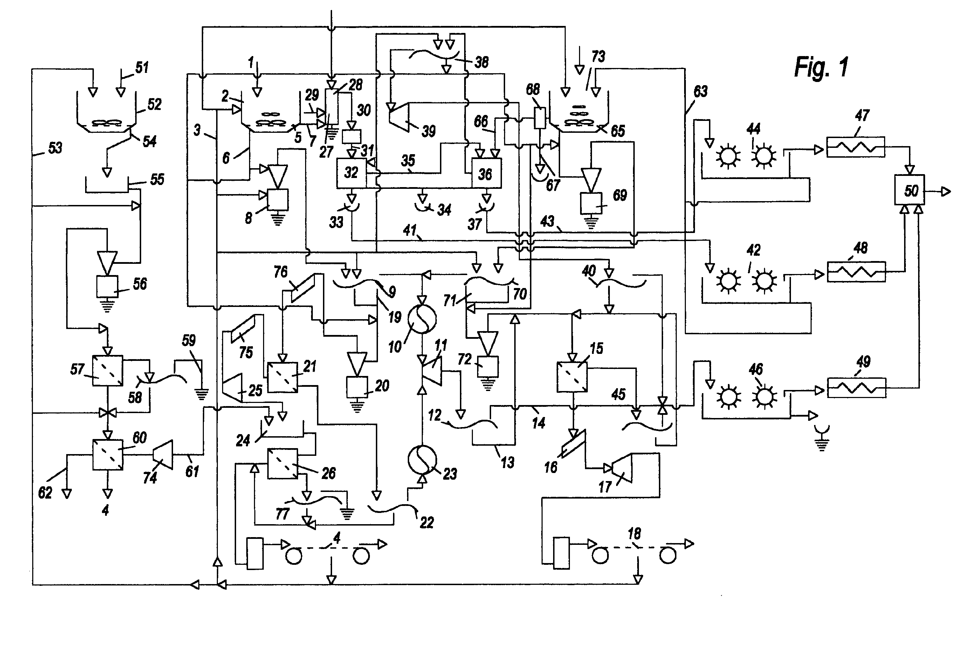

In dem in Figur 1 gezeigten Verfahrensschema werden bei 1 Spuckstoffe getrennt nach weißen und braunen Spuckstoffen in den ersten Pulper 2 gegeben. In diesem Pulper 2 werden die Stoffe mit Wasser 3 aus der Vliesmaschine 4 innig vermengt. Die mittlere Gesamtstoffdichte liegt etwa bei 10 GG%. Im Pulper 2 liegt eine Siebplatte 5, die den nach unten abgezogenen Gutstoffstrom 6 vom Überlauf 7 trennt.

Der Gutstoffstrom 6 fließt aus dem Pulper 2 heraus weiter zu einer Dickstoffschleuder 8 und von dort zu einem Sortierer 9 mit einem Lochdurchmesser von 5,5 mm. Von hier werden die Stippen über eine Schneckenpumpe 10 einem Entstipper 11 zugeführt, an dessen Ausgang ein Sortierer 12 mit einem Lochdurchmesser von 3,0 mm angeordnet ist, um die Faserstoffe 13 von den Begleitstoffen 14 zu trennen. Die Faserstoffe 13 werden alsdann über einen Sortierer 15 mit einer Schlitzweite von 0,2 mm einem Schneckeneindicker 16 zugeführt. Dieser Schneckeneindicker dickt auf einen Trockengehalt von etwa 6 % ein und führt den Stoff über eine Mühle 17 einer weiteren Papiermaschine 18 zu.

Die durch den Sortierer 9 hindurchtretenden Fasern gelangen in eine Bütte 19 und von dort, nach Verdünnung auf etwa 1 % auf eine Cleaneranlage 20 mit anschließendem Eindicker 76 und auf einen Sortierer 21 mit einer Schlitzweite von 0,2 mm. Durch die Cleaneranlage wird Sand entfernt.

Die durch den Sortierer 21 nicht hindurchgehende Fraktion gelangt auf einen Sortierer 22 mit einer Schlitzweite von 0,2 mm und die auch dort nicht hindurchtretende Fraktion gelangt über eine Schneckenpumpe 23 zum Entstipper 11, um von dort, wie oben beschrieben, weiter zur Papiermaschine 18 zu gelangen.

Die durch den Sortierer 21 hindurchgehende Fraktion wird mit einem Schneckeindicker 75 eingedickt auf einen Trockengehalt von ca. 6 GG%, auf einer Mühle 25 gemahlen und gelangt in eine Mischbütte 24 und von dort in einen Drucksortierer 26 mit Schlitz 0,2 mm. Die unabhängige Mahlung von Kurzstoff und Langstoff erhöht die Wirtschaftlichkeit des Prozesses. Der durch den Drucksortierer 26 hindurchtretende Faserstoff gelangt schließlich auf die Vliesmaschine 4, die der Herstellung von Vlies dient. Je nach eingesetztem Reststoff können aus braunen Spuckstoffen braune Vliese und aus weißen Spuckstoffen weiße Vliese mit extrem hoher Qualität erstellt werden. Der durch den Sortierer 26 nicht hindurchtretende Faserstoff gelangt zum Sortierer 77 und von da aus zur Papiermaschine 4. Der durch den Sortierer 77 ausgeschiedene Spuckstoff gelangt zur Entsorgung.

Anstelle der Vliesmaschine 4 kann auch eine Siebpresse oder der Naßteil einer Papiermaschine eingesetzt werden. Das an der Vliesmaschine 4 freiwerdende Wasser wird wie in Figur 1 gezeigt, als Spül-, Einweich- und Verdünnungswasser bei den zuvor genannten Aggregaten verwendet.

Der am Pulper 2 anfallende Überlauf 7 wird zunächst mit Rückwasser der Schneckeneindicker verdünnt, dann werden mit einem Schwerteilabtrenner 27 am Boden einer Mischkammer 28 kontinuierlich Schwerteile entfernt, indem im Bereich der Schwerteilabtrennung Luft 29 in die Mischkammer 28 eingedüst wird. Anschließend folgt ein Vereinzelungssystem 30, in dem mittels eines Adhäsions-Kohäsionssystems und Ablenkblechen (nicht gezeigt) ein Trennen und Verteilen des Stromes 31 der verdünnten Reststoffe erzielt wird.

Der so vorbehandelte Reststoffstrom 31 gelangt auf ein Gliederband 32 mit einer großen Maschenweite von mehreren cm (z.B. 80 x 75 mm), mittels dem die groben Stoffe abgetrennt werden. Auf dem Gliederband 32 wird der Reststoffstrom 31 darüberhinaus mittels Waschdüsen ausgewaschen, so daß Fasern und Kleinteile durch das Gliederband hindurchfallen und größere Stoffe in die Rinne 33 gelangen. Vom durch das Gliederband 32 hindurchgetretenen Stoffstrom 35 wird aufschwimmendes Styropor abgetrennt und einem Styroporsammler 34 zugeführt und der Rest wird einem zweiten Gliederband 36 mit kleinerer Maschenweite (z. B. 40 x 30mm) zugeführt und über ein Düsensystem ausgewaschen. Das Rückwasser wird als Verdünnungswasser verwendet. Die durch das Gliederband nicht hindurchtretenden Stoffe gelangen in die Rinne 37 und die hindurchtretenden Stoffe auf einen Sortierer 38 mit einem Lochdurchmesser von z. B. 15 mm. An diesem Sortierer 38 werden die kleineren Stoffe abgetrennt und als Verdünnungswasser dem Gutstoffstrom 6 und nach dem Pulper 73 zur Nachzerfaserung zugeführt. Die größeren Begleitstoffe bzw. Stippen gelangen über einen Entstipper 39 auf einen Sortierer 40 mit einem Lochdurchmesser von etwa 4,0 mm und durch diesen hindurch zum Sortierer 15 und wie oben beschrieben weiter zur Papiermaschine 18.

Von der Rinne 33 führt ein Förderband 41 für großflächige Begleitstoffe zu einem ersten Sinkschwimmtrennsystem 42 und von der Rinne 37 führt ein zweites Förderband 43 für mittelgroßflächige Begleitstoffe in ein zweites Sinkschwimmtrennsystem 44. Ein weiteres Förderband 45 für kleinflächige Teile führt vom Sortierer 12 und vom Sortierer 40 zu einem dritten Sinkschwimmtrennsystem 46.

In den beiden ersten Sinkschwimmtrennsystemen 42 und 44 setzen sich die Kraftstippen und PVC ab, die in einem weiteren Pulper 73 weiterbehandelt werden. Im dritten Sinkschwimmtrennsystem 46 setzen sich kleinere Schwerteile, wie kleinere PVC-Teile und sonstige Teile ab, die entsprechend entsorgt werden.

Die an der Oberfläche der Sinkschwimmtrennsysteme 42, 44 und 46 entnehmbaren größeren und kleineren Polyethylen und Polypropylenteile werden mit Schneckenpressen 47, 48 und 49 entwässert und einer Pelletieranlage 50 zugeführt oder werkstofflich weiterverarbeitet.

Die pelletierten Polyethylen und Polypropylenteile können zur Dampferzeugung für die Papiermaschine verbrannt werden oder nach einer Pyrolyse mittels eines Gasmotors der Stromerzeugung dienen.

Der Behandlung von Schlamm 51 dient ein weiterer Pulper 52, in dem mit einem Feststoffgehalt von 5 % Schlamm mit Rückwasser 53 vermengt wird. Der aus diesem Pulper 52 entnommene Stoffstrom 54 wird einer Bütte 55 zugeführt und von dort nach vorheriger weiterer Verdünnung mit Restwasser 53 auf 3 GG % Feststoff und in einer Dickstoffschleuder 56 von Schwerteilen befreit. Der gereinigte Stoff wird in einem Sortierer 57 mit einer Schlitzweite von 0,2 mm zugeführt. Der dort nicht hindurchtretende Stoffstrom wird auf einen Sortierer 58 mit einer Schlitzweite 0,2 mm von Splittern 59 getrennt. Die Splitter werden verbrannt und die durch den Sortierer 58 hindurchtretenden Faserstoffe gelangen zusammen mit den durch den Sortierer 57 hindurchtretenden Stoffen nach Verdünnung auf ca. 1 GG% Feststoff in eine Cleaneranlage zur Entfernung von Begleitstoffen, die schwerer als Faserstoff sind (z. B. Absorberteilchen von Windelresten) und dann auf einen Wäscher 60, der eine Kurzstoffausschleusung erlaubt. Hierbei werden vorteilhafterweise die weiter untern beschriebenen, erfindungsgemäßen Sprühteller eingesetzt. Diese Kurzstoffe 61 werden nach Mahlung einer Mühle 74 der weiter oben beschriebenen Bütte 24 zugeführt. Die durch den Wäscher 60 hindurchtretende Flüssigkeit mit hohem Gehalt an Feinstoffen wird als Restwasser der Papiermaschine 4 zugeführt oder einer Kläranlage über die Leitung 62 zugeführt.

In dem Pulper 73 (Rohrreaktor bzw. Pulper mit Verdichter) werden die aus den Sinkschwimmtrennsystemen stammenden Kraftstippen 63 mit Rückwasser 3 vermengt. Davon getrennt können in diesen Pulper naßfeste Papiere bzw. sonstige hochfeste Papiere und Verbundstoffe gegeben werden. Diese Teile werden dort mit einer Gesamtstoffdichte von 30% und mehr stark behandelt und die durch das Sieb 65 des Pulpers 73 nicht hindurchtretenden Stoffe 66 werden dem Gliederbandsystem 36 bzw. besser einem weiteren, hier nicht gezeigten Bandsystem mit wesentlich kleinerer Maschenweite zugeführt, nachdem zuvor Schwerteile 67 über eine luftbeaufschlagte Mischkammer 68 kontinuierlich abgetrennt wurden. Die durch das Sieb 65 des Pulpers 73 hindurchtretenden Faserstoffe werden in einer Dickstoffschleuder 69 vorbehandelt und auf einen Sortierer 70 mit einem Lochdurchmesser von 5,5 mm gegeben. Die durch den Sortierer nicht hindurchtretenden Stoffe werden der Schneckenpumpe 10 zugeführt und von dort wie oben beschrieben weiterbehandelt. Die durch den Sortierer 70 hindurchtretenden Stoffe gelangen in eine Bütte 71 und von dort nach Verdünnung auf 1 GG% Trockensubstanz in eine Cleaneranlage 72 zur Entfernung vorallem von kleineren Glassplittern und nach Eindickung weiter zum Sortierer 15, der schon weiter oben beschrieben wurde.

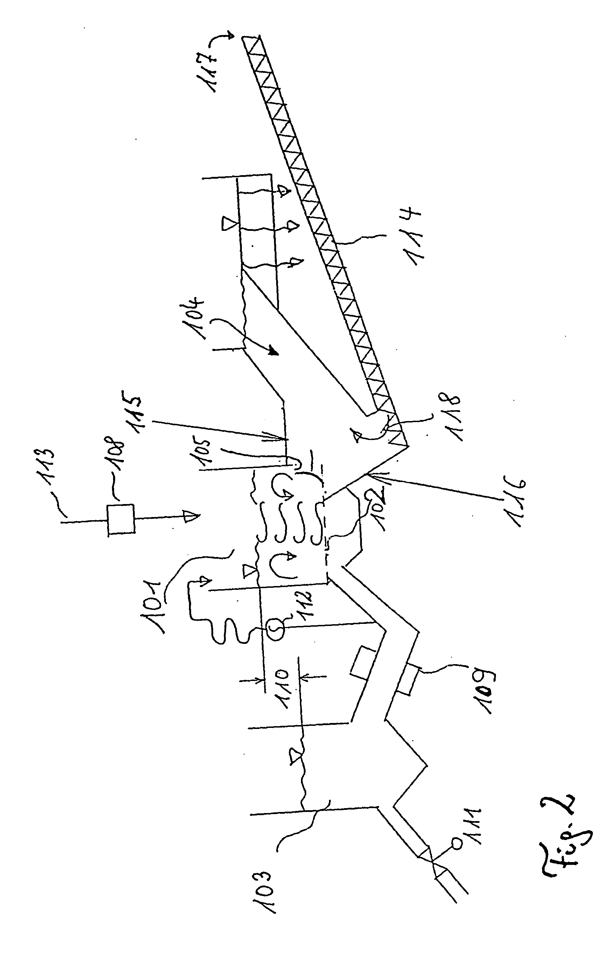

Figur 2 zeigt einen kontinuierlich arbeitenden Hochstoffdichtepulper 101, bei dem Faserstoffe durch ein Lochblech 102 über ein Gutstoffdifferenzdrucksystem 103 abgezogen werden und gleichzeitig die Begleitstoffe über ein Überlaufsystem 104 den Pulper 101 durch eine relativ große Öffnung 105 verlassen. Bei einem üblichen Pulper beträgt die Größe der Öffnung etwa 600 x 600 mm². Ein Umlenkblech 106 verhindert das unkontrollierte Austreten von nicht aufgelösten Stippen und eine Öffnung 107 an tiefster Stelle des Pulperbodens vor dem Umlenkblech läßt schwere Fremdstoffe auf schnellstem Wege das System verlassen.

Über zwei Durchflußmeßsysteme 108 und 109 und die Einstellung des Differenzdrucks 110 über die Regelarmatur 111 wird die Wasserzu- und Gutstoffabfuhr derart geregelt, daß nur so wenig Begleitstoffe wie nötig den Pulper verlassen. Dadurch ist die notwendige Auflösezeit für die schwer zerfaserbaren Faserstoffe gewährleistet.

Zum Messen der Stoffdichte ist ein sogenannter Stoffdichterohrgeber 112 vorgesehen, der die Stoffdichte mißt und die Wasserzufuhr 113 regelt, so daß eine gleichbleibende, sehr geringe Faserstoffdichte erzielt wird.

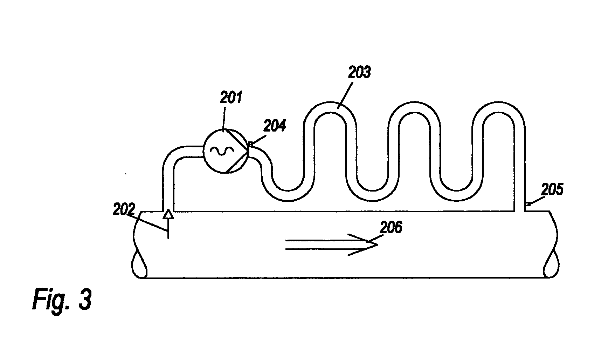

Das Prinzip der Meßvorrichtung 112 ist in Figur 3 genauer erläutert. Der Stoffdichtegeber weist eine Verdrängerpumpe 201, wie beispielsweise eine Exzenterschneckenpumpe oder eine im Volumenstrom geregelte Kreiselpumpe auf, die einen definierten Stoffmengenstrom im Bypaß 202 durch ein langes Rohr oder einen langen Schlauch 203 fördert. Der Rohrreibungswiderstand bewirkt dabei einen der Stoffdichte proportionalen Differenzdruck zwischen den Punkten 204 und 205 am Anfang und am Ende des Rohres.

Die Vorteile gegenüber herkömmlichen Systemen sind:
1. Unabhängigkeit vom Vordruck und der Geschwindigkeit des Hauptstroms 206,
2. Verstopfungsfreiheit,
3. Unempfindlichkeit gegenüber Inhomogenitäten im Hauptstrom oder Bypaß,
4. nahezu beliebig genau kalibrierbar,
5. nahezu beliebig kleine und große Stoffdichten sind meßbar.

Bei dem in Figur 2 gezeigten Beispiel ist der Bypaß ein an seinem Ende zum Atmosphärendruck offener Rücklauf. Dem Meßpunkt 205 entspricht somit der Atmosphärendruck.

Die bisher beschriebene Spuckstoffbehandlung sollte im Sinne einer höheren Wertschöpfung für Spuckstoffe mit kleineren Abmessungen (insbesondere solche aus Endstufensortierern von Feinreinigungsstufen) und größeren Abmessungen (insbesondere solchen aus Pulperentsorgungssystemen) getrennt durchgeführt werden, da statistisch mehr störende Begleitstoffe (insbesondere sogenannte Stickies) in den kleinen Begleitstoffen bzw. Rejekten von Papierfabriken zu finden sind.

Die Figur 2 zeigt mit der Bezugsziffer 115 die Position, an der nach einer Vorbehandlung im Pulper 101 die Reststoffe mit Wasser hoher Geschwindigkeit verdünnt werden und somit durch Turbulenz eine Vereinzelung erzeugt wird. Unterstützend zur Verdünnung und Durchmischung der Rejekte mit Wasser wird an Punkt 116 in Figur 2 Luft eingedüst, so daß jede Faser nicht nur benetzt, sondern vollständig von Wasser umgeben ist und Schwerteile, insbesondere auch sogenannte technische Kunststoffe, also solche > > 1g/cm³ in dem folgenden Schwerteilefang 114 absinken können. Der Schwerteilefang 114 hat eine Gegenstromwäsche. Hierzu wird Wasser am Punkt 117 dem Schwerteilefang 114 zugeführt und am Punkt 118 aus dem Schwerteilefang entfernt.

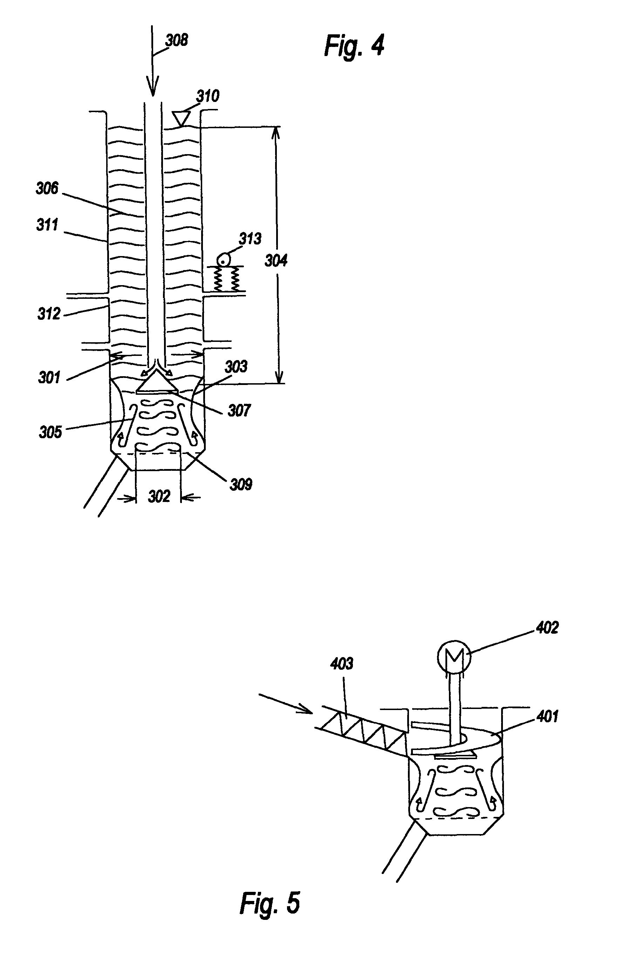

Figur 4 zeigt eine alternative Ausgestaltung eines Pulpers, der als Pulper 101 nach Figur 2 bzw. 73 nach Figur 1 einsetzbar ist. Dieser Pulper hat ein großes Verhältnis von Schraubenvolumen zu Pulpereffektivvolumen und ein großes Verhältnis von Höhe zu Durchmesser. Bei einem Durchmesser 301 von z. B. 1500 mm führt der Schraubendurchmesser 302 auf z. B. 500 mm zu einer funktionsfähigen Stoffdichte von etwa 20%. Eine Einschnürung 303 von z. B. 300 mm läßt den Betrieb bei einer Stoffdichte von mehr als 30% zu. Voraussetzung hierbei ist, eine große zur Verfügung stehende Pulperhöhe. Eine Überschichtung 304 von z. B. 4000 mm führt hierbei zur besagten Stoffdichte von über 30%.

Durch die beschriebene Ausgestaltung verhält sich der Pulper wie ein Rohrreaktor, d. h. es kommt zu einer besonders homogenen Durchmischung im unteren Teil 305, verbunden mit einer sehr effektiven und gleichmäßigen Fasersuspendierung bei optimaler Schonung der für die Papierherstellung störenden sogenannten Stickies und außerdem zu einer Pufferwirkung mit Vergleichmäßigung der Rejekte im oberen Raum 306 und darüberhinaus zu einer extrem hohen Zerfaserungsleistung selbst großer Durchsätze.

Hierbei wird durch die Einschnürung 303 eine Umwälzung bei der oben genannten extrem hohen Stoffdichte gewährleistet. Die Wahl eines kleineren Pulpers bei gleicher Schraube bzw. einer größeren Schraube bei gleichem Pulper führt hierbei zu einer ähnlichen Wirkung.

Der Betrieb des Pulpers als Rohrreaktor mit Überschichtung und oberer Abschlußplatte und Kegel 307, wird durch Stoff- und Wasserbilanzierung derart ermöglicht, daß ständig alle suspendierten Fasern mittels Wasser 308 durch das Pulperlochblech 309 gelangen. Dadurch kommt es im Pulper zur Ausbildung eines Kugelmühleneffektes, bei dem die härteren Begleitstoffe unter dem Einfluß hoher Gesamtstoffdichte und starkem Umtrieb die eingetragenen Stippen wirkungsvoll zerkleinern. Diese Zerkleinerung findet auch in Abwesenheit der Begleitstoffe statt. Die Stippen zerreiben sich dann gegenseitig.

Die extrem hohe Gesamtstoffdichte wird hierbei durch Messung der Schütthöhe 310 konstant gehalten. Die Abschlußplatte mit Kegel 307 verhindert hierbei ein Hineinziehen der darüberliegenden Rejekte durch die Schraube. Ergänzt wird das System durch die in den Figuren 2 und 3 beschriebene Gesamtstoffdichteregelung des kontinuierlich betriebenen Hochstoffdichtepulpers und durch die Aufschaltung der aufgenommenen Pulperantriebsleistung als weitere Regelgröße sowie durch die Aufschaltung der dem Pulper zugeführten Spuchstoffmenge.

Um mögliche Verstopfungen zu vermeiden, ist der Pulperaufsatz 311 durch ein elastisches Rohrteil 312 mit dem Rüttler 313 vom unteren Teil des Rohrreaktors getrennt.

Wenn keine ausreichende Raumhöhe zur Verfügung steht, ist auch gemäß Figur 5 der Einsatz eines Verdichters 401 in Form einer aufgeschnittenen Platte, vorzugsweise mit eigenem Antrieb 402 oder in Gestalt eines Verdichterpropellers, eine besonders vorteilhafte Ausgestaltungsform. Die Rejektzufuhr erfolgt hierbei durch ein Zufuhrsystem 403. Die übrigen Teile entsprechen der Ausführungsform gemäß Figur 4.

## Patentansprüche

1. Verfahren zur Gewinnung von Faserstoffen und Begleitstoffen, wie z. B. Kunststoffen aus Reststoffen, die bei der Papierherstellung aussortiert werden, ohne Zerschneiden der die Papierherstellung störenden Stoffe, ***dadurch gekennzeichnet, dass*** die Reststoffe in einem kontinuierlich betriebenen Pulper (2, 51, 73, 101) bei hoher Gesamtstoffdichte und bei gleichzeitig niedriger Faserstoffdichte behandelt werden, unter dem Vorbehalt, dass wenn der Reststoff ein Spuckstoff ist, die Gesamtstoffdichte 10 bis 30 % und darüber beträgt.

2. Verfahren nach Anspruch 1, ***dadurh gekennzeichnet, dass*** zumindest ein Teilstrom der Reststoffe in einem Pulper (73) bei einer Gesamtstoffdichte von über 20 % und einer Faserstoffdichte von unter 5 %, vorzugsweise unter 1 %, behandelt wird.

3. Verfahren nach einem der vorhergehenden Ansprüche, ***dadurch gekennzeichnet, dass*** die Reststoffe vor der Trennung auf 0,5 % Faserstoffldichte, vorzugsweise 0,1% Faserstoffdichte, suspendiert werden.

4. Verfahren nach einem der vorhergehenden Ansprüche, ***dadurch gekennzeichnet, dass*** in einem zweiten Pulper (73) zumindest ein Teilstrom eines ersten, vorgeschalteten Pulpers (2), der mit geringerer Gesamtstoffdichte als der zweite Pulper (73) betrieben wird, behandelt wird.

## Claims

1. A method for producing fibre materials and accompanying materials, as for instance synthetic materials made from waste materials that have been sorted out during paper production, without chopping up the materials interfering with the paper production, ***characterized in that*** the waste materials are treated at high global consistency and at simultaneously low fibre material consistency in a continuously operating pulper (2, 51, 73, 101), with the proviso that when the waste material is a reject, the global consistency amounts to 10 to 30% and higher.

2. The method according to claim 1, ***characterized in that*** at least one partial flow of the waste materials is treated in a pulper (73) at a global consistency of above 20% and a fibre material consistency of below 5%, preferably below 1%.

3. The method according to one of the afore-mentioned claims, ***characterized in that*** the waste materials are suspended at 0,5% fibre material consistency, preferably 0,1% fibre material consistency, before being separated.

4. The method according to one of the afore-mentioned claims, ***characterized in that*** at least one partial flow of a first series connected pulper (2) that is operated at lower global consistency than the second pulper (73) is treated in a second pulper (73).

## Revendications

1. Procédé pour l'obtention de matières fibreuses et de matières associées, telles que par exemple des matières synthétiques issue de déchets éliminés lors de la production de papier, sans découpage des matières dérangeant la production de papier, ***caractérisé en ce que*** les déchets sont traités dans un pulpeur (2, 51, 73, 101) opérant en continu lorsque leur consistance générale est élevée et que la consistance de la matière fibreuse est simultanément faible, sous réserve que lorsque le déchet est une boue de papeterie, la consistance générale vaut 10 à 30 % et plus.

2. Procédé selon la revendication 1, ***caractérisé en ce qu'**au* moins un flux partiel de déchets est traité dans un pulpeur (73) lorsque sa consistance générale est supérieure à 20% et que la consistance de la matière fibreuse est inférieure à 4%, de préférence inférieure à 1 %.

3. Procédé selon l'une quelconque des revendications précédentes, ***caractérisé en ce que*** les déchets sont mis en suspension avant d'être séparés, la matière fibreuse ayant alors une consistance de 0,5%, de préférence une consistance de 0,1%.

4. Procédé selon l'une quelconque des revendications précédentes, ***caractérisé en ce qu'**au* moins un flux partiel d'un premier pulpeur (2) monté en série et opérant avec une consistance générale plus faible que le deuxième pulpeur (73), est traité dans un deuxième pulpeur (73).
